# FASCICULE DE BREVET EUROPEEN

(11) **EP 0 581 368 B1**
(45) Date de publication et mention de la délivrance du brevet: **08.10.1997**
(21) Numéro de dépôt: 93202121.5
(22) Date de dépôt: 20.07.1993
(51) Int. Cl.: B29C 47/88, B29C 59/04, B29C 33/04

(54) **Dispositif de conditionnement thermique de cylindres presseurs utilisés dans le traitement de films plastiques chauds**
Vorrichtung zur thermischen Konditionierung von Druckwalzen zur Behandlung erwärmter Kunststoffolien
Thermal conditioning device for pressure rolls, used in the treatment of heated plastic films

(30) Priorité: 29.07.1992 BE 9200689
(43) Date de publication de la demande: 02.02.1994
(73) Titulaire: SOLVAY (Société Anonyme), B-1050 Bruxelles (BE)
(72) Inventeur: Branchadell, José, B-1970 Wezembeek-Oppem (BE)
(74) Mandataire: Dufrasne, Eugène

(56) Documents cités:
- EP-A- 0 448 865
- WO-A-92/19809
- GB-A- 1 526 918
- GB-A- 2 178 509
- US-A- 4 066 731
- DATABASE WPIL Week 8549, Derwent Publications Ltd., London, GB; AN 85-306810 & JP-A-60 212 825 (KONISHIROKU PHOTO KK) 25 Octobre 1985

## Description

La présente invention concerne un dispositif de conditionnement thermique de cylindres presseurs utilisés dans le traitement de films plastiques chauds, notamment dans des installations de grainage ou d'extrusion sur cylindre de trempe (chill roll).

Dans de telles installations, le film plastique chaud est généralement appliqué contre un cylindre principal de traitement, avec lequel il reste en contact sur une portion importante de la circonférence, en général sur plus de 60°.

Ce cylindre principal, généralement métallique, peut notamment être lisse et avoir pour fonction de refroidir brusquement un film de matière plastique fraîchement extrudé dans le cas du recours à la technique dite au cylindre de trempe. Ce cylindre principal peut également être un cylindre de grainage dont la surface, généralement métallique, comporte une texture ou des motifs en relief devant être reproduits sur le film ainsi traité. Dans chaque cas, ce cylindre principal présente généralement un diamètre important, par exemple de l'ordre de 300 à 900 mm.

Le cylindre principal est généralement équipé d'au moins un cylindre presseur dont le rôle est d'assurer, de façon très localisée, une pression suffisante entre le film plastique à traiter et le cylindre principal, dans le but d'améliorer l'efficacité soit du refroidissement du film, lorsque le cylindre principal est un cylindre de trempe, soit du grainage, lorsque le cylindre principal est un cylindre de grainage. Afin de garantir une répartition uniforme de la pression sur toute la largeur de la zone de contact et d'éviter toute détérioration du film plastique traité, le cylindre presseur est en général revêtu d'une matière élastique, par exemple de caoutchouc.

Un tel cylindre presseur pose toutefois un problème en ce qui concerne son refroidissement. En effet, la matière plastique traitée sous forme de film se trouve généralement à une température élevée lors de son application contre le cylindre principal refroidi et, dès lors, la température superficielle du cylindre presseur en contact avec la face non refroidie du film risque de s'éléver progressivement et partant d'entraîner une adhérence non désirée de ce film sur le cylindre presseur avec pour conséquence un risque de déchirement ou de plissage du film plastique traité. Pour cette raison et également pour éviter une dégradation thermique de son revêtement, le cylindre presseur doit donc être correctement refroidi en surface. Alors qu'un cylindre de trempe ou un cylindre de grainage, entièrement métallique, peut être refroidi par une circulation interne de liquide de refroidissement, la mauvaise conductivité thermique du matériau élastique de revêtement s'oppose à une telle solution pour un cylindre presseur.

Une solution simple pour réfrigérer superficiellement un tel cylindre presseur peut consister à faire ruisseler un liquide froid sur ce cylindre presseur ou de le faire tremper partiellement dans un bac rempli d'un liquide de refroidissement approprié mais, dans ce cas, des gouttelettes de liquide entraînées par le cylindre presseur peuvent entrer en contact avec le film traité, ce qui risque d'en altérer la surface en provoquant, par exemple, l'apparition de zones brillantes. Une telle solution empêche également de pouvoir positionner le cylindre presseur et son dispositif de refroidissement en n'importe quel endroit du cylindre principal (par exemple en dessous ou au-dessus), sans quoi des gouttelettes de liquide réfrigérant pourraient notamment ruisseler directement sur le film. On peut certes utiliser un dispositif supplémentaire, tel qu'une racle, pour minimiser un entraînement du liquide de refroidissement sur le cylindre presseur mais on risque dans ce cas d'endommager le revêtement du cylindre presseur et d'altérer son efficacité à long terme.

Le document JP-A-60/212825 décrit une installation pour le traitement de films comprenant 2 cylindres métalliques chauffés (1) et 2 cylindres élastiques (2), disposés en alternance (1/2/1/2), dont les axes sont parallèles et contenus dans un même plan. Ces cylindres sont en contact, de manière à pincer un film passant entre eux. Les cylindres élastiques sont refroidis grâce à des buses de soufflage (11) disposées dans les 2 volumes clos définis par chaque cylindre élastique (2) et par le film, qui forme deux boucles autour de ces cylindres. L'air conditionné entre ainsi en contact direct avec le film, ce qui conduit au problème susmentionné.

La présente invention a pour objet de proposer un dispositif de conditionnement de cylindres presseurs qui élimine les inconvénients sus-mentionnés.

La présente invention concerne, dès lors, un dispositif de conditionnement thermique d'un cylindre presseur utilisé pour traiter des films plastiques chauds sur un cylindre principal de traitement, qui se caractérise en ce que le cylindre presseur est pressé contre le cylindre principal par au moins deux cylindres d'appui espacés, entre lesquels est disposé un répartiteur constitué par une enceinte fermée comportant une entrée raccordée à une source d'air conditionné en température et/ou en humidité, et au moins un orifice de sortie dirigeant et répartissant uniformément l'air conditionné sur la partie du cylindre presseur limitée par les deux cylindres d'appui.

Le dispositif conforme à l'invention est, par ailleurs, explicité plus en détail dans la description qui va suivre d'une mode de réalisation préférentiel.

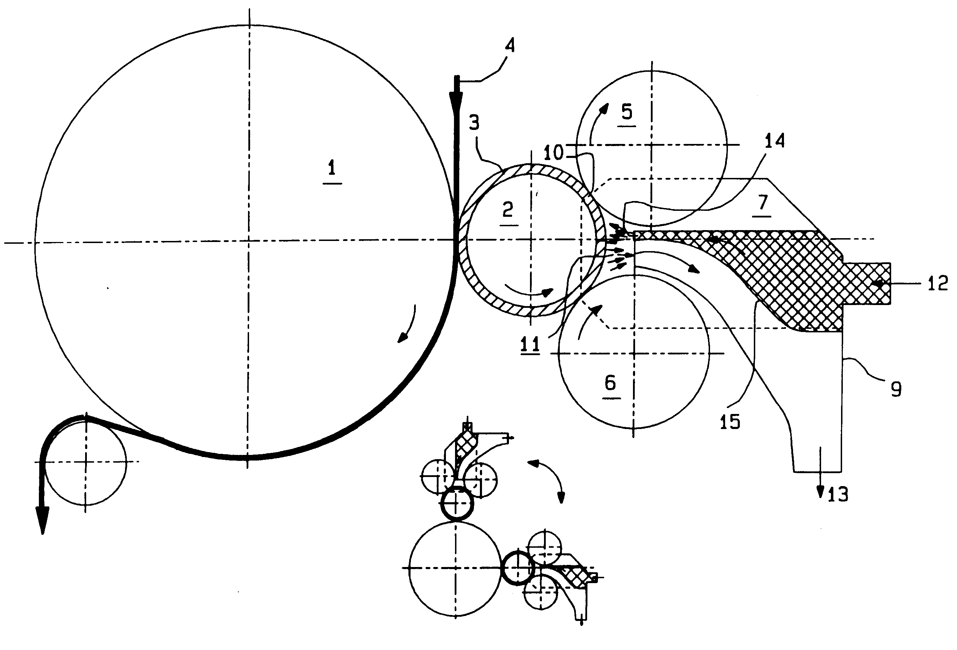

Dans cette description, on se réfèrera à la figure unique du dessin annexé qui donne, en élévation et en coupe, une vue schématique d'un dispositif conforme à l'invention.

Ainsi qu'il apparaît sur la figure, l'installation pour le traitement de films plastiques chauds (4) est constituée par un cylindre de traitement principal (1) métallique, en l'occurrence un cylindre de grainage ou de trempe brusque, ledit cylindre étant refroidi de façon classique par une circulation interne d'un fluide réfrigérant non représentée.

Le cylindre principal (1) est équipé d'un cylindre presseur (2) en métal qui a pour fonction d'appliquer fermement le film plastique chaud (4) à traiter contre le cylindre principal (1), ce cylindre presseur (2) étant recouvert sur sa périphérie par un revêtement élastique (3), par exemple en caoutchouc ou en élastomère synthétique.

Conformément à l'invention, le cylindre presseur est maintenu contre le film plastique chaud par deux cylindres d'appui (5)(6) écartés et exerçant une pression réglable sur la paroi latérale du cylindre presseur (2). Les cylindres d'appui (5)(6) de même que le cylindre presseur (2) peuvent avantageusement être équipés de canalisations internes (non représentées) pouvant véhiculer un fluide de réfrigération approprié.

La réfrigération superficielle du cylindre presseur (2) est assurée par un répartiteur (9) constitué par une enceinte fermée qui est disposé entre les cylindres d'appui (5)(6) et comporte une entrée (12) raccordée à une source d'air conditionné en température et/ou en humidité (non représentée).

Le répartiteur (9) comporte, en outre, un orifice de sortie (14) dirigeant et répartissant uniformément l'air conditionné uniquement sur la surface du cylindre presseur (2) comprise entre les deux cylindres d'appui (5)(6). L'orifice de sortie (14) peut notamment se présenter sous la forme d'une fente ou d'une série d'ouvertures contiguës s'étendant préférentiellement sur toute la longueur d'une génératrice du cylindre presseur (2). L'orifice de sortie (14) peut également être équipé de moyens (non représentés) tels que des ailettes, des plaques perforées ou des tubulures ayant pour objet de répartir de façon uniforme le flux d'air conditionné le long de la surface du cylindre presseur (2).

Le répartiteur (9) peut être avantageusement complété par deux flasques latérales (7), généralement constituées par des tôles métalliques, disposées le long des extrémités des cylindres d'appui (5)(6) et perpendiculairement à leur axe. Les flasques latérales (7) ont pour fonction d'empêcher ou tout au moins de minimiser les fuites latérales d'air conditionné.

Le répartiteur (9) peut également être avantageusement équipé d'une buselure d'évacuation (13) séparée de l'orifice d'entrée (12) par une cloison interne (15) divisant transversalement le répartiteur (9). La buselure d'évacuation (13) qui peut déboucher à l'air libre ou être raccordée à un dispositif d'aspiration (non représenté) a pour but de permettre une reprise et une évacuation de l'air conditionné injecté par le répartiteur (9) dans l'espace de réfrigération (11) délimité par le cylindre presseur (2), les cylindres d'appui (5)(6), le répartiteur (9) et les flasques (7) et partant de maintenir un courant d'air conditionné au niveau de la surface devant être réfrigérée du cylindre presseur (2).

Dans le dispositif, tel qu'illustré par la figure, le cylindre presseur (2) est placé en position de trois heures par rapport au cylindre principal (1) mais il est bien évident que, dans le dispositif conforme à l'invention, le cylindre presseur (2) peut être disposé sans aucun problème en tout endroit souhaité de la périphérie du cylindre principal (1).

Dans le dispositif conforme à l'invention, il apparaît également que le contact étroit (10) entre le cylindre presseur (2) et le cylindre d'appui (5) minimise tout transfert sur le film plastique traité d'un éventuel dépôt d'eau de condensation sur la surface du cylindre presseur (2) dans sa zone réfrigérée.

Le diamètre du cylindre presseur (2) et le diamètre des cylindres d'appui (5)(6) peuvent être quelconques et, en général, pour des raisons d'encombrement, on préfère maintenir ceux-ci à une valeur aussi faible que possible compatible avec une résistance mécanique suffisante.

Lors de l'exploitation du dispositif tel que décrit, il est loisible de faire varier la température et/ou le degré d'humidité et/ou le débit de l'air conditionné en fonction de la vitesse de rotation de l'un quelconque des cylindres (1), (2), (5), (6) et donc, en fait, en fonction de la vitesse de défilement du film plastique chaud traité (4) et d'ainsi maîtriser la température superficielle du cylindre presseur (2) en fonction de la productivité pour une application donnée.

Ainsi, il a été constaté qu'il est notamment possible dans le dispositif conforme à l'invention d'utiliser dans certains cas de l'air ambiant en tant que fluide de réfrigération du cylindre presseur (2) et de faire varier uniquement le degré d'humidité de cet air en fonction de la vitesse de défilement du film traité pour maîtriser la température superficielle du cylindre presseur.

Il est toutefois loisible d'automatiser complètement le dispositif selon l'invention et, à cet effet, de prévoir le placement de capteurs (non représentés) tels que des capteurs de température et/ou de degré d'humidité de la surface du cylindre presseur (2) disposés notamment en regard de la partie de ce cylindre comprise entre le cylindre principal (1) et le cylindre d'appui (5) et de raccorder ceux-ci, via une boucle de régulation appropriée, à des organes de commandes permettant de modifier automatiquement la température et/ou le degré d'humidité et/ou le débit de l'air conditionné de façon à contrôler efficacement la température superficielle du cylindre presseur (2) quels que soient les autres paramètres de fonctionnement du dispositif.

## Revendications

1. Dispositif de conditionnement thermique d'un cylindre presseur (2) utilisé dans le traitement de films plastiques chauds (4) sur un cylindre principal de traitement (1) caractérisé en ce que le cylindre presseur (2) est pressé contre le cylindre principal (1) par au moins deux cylindres d'appui espacés (5, 6) n'entrant pas en contact avec le cylindre principal de traitement (1) ni avec un éventuel film déposé sur celui-ci, entre lesquels est disposé un répartiteur (9) constitué par une enceinte fermée comportant une entrée (12) raccordée à une source d'air conditionné en température et/ou en humidité, et au moins un orifice de sortie (14) dirigeant et répartissant uniformément l'air conditionné sur la partie du cylindre presseur (2) limitée par les deux cylindres d'appui (5), (6), l'air conditionné n'entrant pas en contact avec le cylindre principal de traitement (1) ni avec un éventuel film déposé sur celui-ci.

2. Dispositif selon la revendication 1, caractérisé en ce que le répartiteur (9) est complété par deux flasques latérales (7) disposées le long des extrémités des cylindres d'appui (5), (6) et perpendiculairement à leur axe.

3. Dispositif selon l'une quelconque des revendications 1 ou 2 caractérisé en ce que le répartiteur (9) est équipé d'une buselure d'évacuation (13) séparée de l'orifice d'entrée (12) par une cloison interne (15).

4. Dispositif selon l'une quelconque des revendications 1 à 3 caractérisé en ce qu'au moins un des cylindres d'appui (5), (6) est équipé de canalisations internes pouvant véhiculer un fluide réfrigérant.

5. Dispositif selon l'une quelconque des revendications 1 à 4 caractérisé en ce que le cylindre presseur (2) est équipé de canalisations internes pouvant véhiculer un fluide réfrigérant.

6. Dispositif selon l'une quelconque des revendications 1 à 5 caractérisé en ce que la température et/ou le degré d'humidité et/ou le débit de l'air conditionné sont réglés en fonction de la vitesse de rotation de l'un quelconque des cylindres (1)(2)(5) ou (6).

7. Dispositif selon l'une quelconque des revendications 1 à 5, caractérisé en ce qu'il est équipé de capteurs disposés en regard de la partie du cylindre de pression (2) comprise entre le cylindre principal et le cylindre d'appui (5), lesdits capteurs, via une boucle de régulation appropriée, permettant de faire varier automatiquement la température et/ou le degré d'humidité et/ou le débit de l'air conditionné.

8. Films plastiques traités obtenus à l'aide du dispositif faisant l'objet des revendications 1 à 7.

## Claims

1. Thermal conditioning device for a pressure roll (2) used in the treatment of hot plastic films (4) on a main treatment roll (1), characterized in that the pressure roll (2) is pressed against the main roll (1) by at least two spaced-apart back-up rolls (5, 6) which come into contact neither with the main treatment roll (1) nor with any film deposited on the latter, between which back-up rolls is placed a distributor (9) consisting of a closed chamber having an inlet (12) connected to a source of temperature- and/or humidity-conditioned air and at least one outlet orifice (14) directing and uniformly distributing the conditioned air over that part of the pressure roll (2) bounded by the two back-up rolls (5), (6), the conditioned air coming into contact neither with the main treatment roll (1) nor with any film deposited on the latter.

2. Device according to Claim 1, characterized in that the distributor (9) is completed by two side plates (7) placed along the ends of the back-up rolls (5), (6) and perpendicularly to their axis.

3. Device according to either of Claims 1 and 2, characterized in that the distributor (9) is equipped with an exhaust nozzle (13) separated from the inlet orifice (12) by an internal partition (15).

4. Device according to any one of Claims 1 to 3, characterized in that at least one of the back-up rolls (5), (6) is equipped with internal pipes which can convey a refrigerant.

5. Device according to any one of Claims 1 to 4, characterized in that the pressure roll (2) is equipped with internal pipes which can convey a refrigerant.

6. Device according to any one of Claims 1 to 5, characterized in that the temperature and/or the degree of humidity and/or the flow rate of the conditioned air are set depending on the speed of rotation of any one of the rolls (1), (2), (5) or (6).

7. Device according to any one of Claims 1 to 5, characterized in that it is equipped with sensors placed opposite that part of the pressure roll (2) lying between the main roll and the back-up roll (5), the said sensors making it possible, via an appropriate control loop, to vary the temperature and/or the degree of humidity and/or the flow rate of the conditioned air automatically.

8. Treated plastic films obtained using the device forming the subject of Claims 1 to 7.

## Patentansprüche

1. Vorrichtung zur thermischen Konditionierung einer Andruckwalze (2), die bei der Behandlung von warmen Kunststoffolien (4) auf einer Hauptbehandlungswalze (1) verwendet wird, dadurch gekennzeichnet, daß die Andruckwalze (2) von mindestens zwei im Abstand angeordneten, weder mit der Hauptbehandlungswalze (1) noch mit einer eventuellen, auf diese aufgelegten Folie in Berührung kommenden Stützwalzen (5, 6) gegen die Hauptwalze (1) gedrückt wird, zwischen denen ein Verteiler (9) angeordnet ist, der von einem geschlossenen Gehäuse gebildet wird, mit einem Einlaß (12), welcher mit einer Quelle von hinsichtlich Temperatur- und/oder Feuchtigkeit klimatisierter Luft verbunden ist, und mindestens einer Austrittsöffnung (14), welche die klimatisierte Luft auf den von den beiden Stützwalzen (5), (6) begrenzten Teil der Andruckwalze (2) lenkt und gleichmäßig auf diesem verteilt, wobei die klimatisierte Luft weder mit der Hauptbehandlungswalze (1) noch mit einer eventuellen, auf diese aufgelegten Folie in Berührung kommt.

2. Vorrichtung nach Anspruch 1, dadurch gekennzeichnet, daß der Verteiler (9) durch zwei Seitenwangen (7) ergänzt wird, die entlang der Enden der Stützwalzen (5), (6) und senkrecht zu ihrer Achse angeordnet sind.

3. Vorrichtung nach einem beliebigen der Ansprüche 1 oder 2, dadurch gekennzeichnet, daß der Verteiler (9) mit einem Abzug (13) ausgestattet ist, der von der Einlaßöffnung (12) durch eine innere Trennwand (15) getrennt ist.

4. Vorrichtung nach einem beliebigen der Ansprüche 1 bis 3, dadurch gekennzeichnet, daß mindestens eine der Stützwalzen (5), (6) mit inneren Kanälen versehen ist, die ein Kühlfluid transportieren können.

5. Vorrichtung nach einem beliebigen der Ansprüche 1 bis 4, dadurch gekennzeichnet, daß die Andruckwalze (2) mit inneren Kanälen versehen ist, die ein Kühlfluid transportieren können.

6. Vorrichtung nach einem beliebigen der Ansprüche 1 bis 5, dadurch gekennzeichnet, daß die Temperatur und/oder der Feuchtigkeitsgrad und/oder die Durchflußmenge der klimatisierten Luft in Abhängigkeit von der Rotationsgeschwindigkeit irgendeiner der Walzen (1) (2) (5) oder (6) geregelt wird.

7. Vorrichtung nach einem beliebigen der Ansprüche 1 bis 5, dadurch gekennzeichnet, daß sie mit Meßfühlern ausgestattet ist, die gegenüber von demjenigen Teil der Andruckwalze (2) angeordnet sind, der zwischen der Hauptwalze und der Stützwalze (5) eingeschlossen ist, wobei es die besagten Meßfühler über eine geeignete Regelschleife gestatten, die Temperatur und/oder den Feuchtigkeitsgrad und/oder die Durchflußmenge der klimatisierten Luft automatisch zu verändern.

8. Behandelte Kunststoffolien, die mit Hilfe der Vorrichtung erhalten wurden, welche den Gegenstand der Patentansprüche 1 bis 7 bildet.
